# EUROPEAN PATENT SPECIFICATION

(11) **EP 4 421 956 B1**
(45) Date of publication and mention of the grant of the patent: **01.10.2025**
(21) Application number: 23158678.5
(22) Date of filing: 27.02.2023
(51) Int. Cl.: H01M 50/24, B01D 53/26, H01M 50/30, H01M 50/317

(54) **BATTERY DRYING DEVICE**
BATTERIETROCKNUNGSVORRICHTUNG
DISPOSITIF DE SÉCHAGE DE BATTERIE

(43) Date of publication of application: 28.08.2024
(73) Proprietor: MANN+HUMMEL GmbH, 71636 Ludwigsburg (DE)
(72) Inventor: KOLCZYK, Markus, 74395 Mundelsheim (DE)
(74) Representative: Mann + Hummel Intellectual Property

(56) References cited:
- WO-A1-2020/259616
- CN-A- 113 571 833
- DE-A1- 102009 050 878
- US-A1- 2016 372 726
- US-A1- 2017 279 169
- US-A1- 2021 098 842

## Description

### Technical Field

Embodiments to a battery drying device for a battery, to a battery with a battery drying device, to a vehicle having a battery with a battery drying device, and to a method of operating a battery drying device.

### Background Art

A battery drying device for a battery is known from DE 10 2014 203 927 A1. The battery drying device has a housing which is inserted into an opening in a battery housing of a battery, hence the battery drying device being fully integrated into the battery housing. The battery drying device includes a drying agent that adsorbs moisture that enters the battery drying device via incoming air from inside the battery housing.

The battery drying device is equipped with a heating device with which the drying agent can be heated and adsorbed moisture can be released. During this regeneration process, an opening in battery drying device to the interior of the battery housing is closed and, at the same time, an outflow opening is opened through which the moisture from the drying agent can escape into the environment.

It is an object of the embodiments to operate a battery drying device with high efficiency over a long period of time.

CN 113 571 833 A describes a battery pack comprising a battery pack body, a BMS arranged in the battery pack body, and a dehumidification explosion-proof valve. A first end of a shell of the battery pack is provided with an air hole communicated with a hollow cavity. A dehumidifying part is arranged in the shell and is positioned at a downstream position of an air vent. A heating member is provided in the shell and on the dehumidifying part, the heating member being electrically connected to the BMS. A regenerative sealing valve is electrically connected to the BMS, and an explosion-proof valve body assembly is disposed on the first end of the shell.

DE 10 2009 050878 A1 refers to a battery having a battery housing, and a dehumidified filter element that is arranged outside the battery housing. A filter element separates an interior of the battery housing against environment air-conduction. The filter element exhibits components bonded with gaseous, organic and/or inorganic materials. The filter element exhibits a layer, which is designed as a fibrous web or membrane. The filter element exhibits another layer, which is designed as bulk of adsorbing materials. The filter element exhibits a third layer, which is designed as a microporous film.

US 2021/098842 A1 describes a battery system including a battery housing, a pressure-equalizing device, and a circuit. At least one rechargeable battery cell may be accommodated in the battery housing. A gas may be flowable through the pressure-equalizing device to equalize a pressure between the battery housing and a surroundings disposed outside the battery housing. A cooling liquid may circulate through the circuit during operation. The battery housing may be integrated in the circuit such that the cooling liquid flows around the at least one battery cell during operation. The pressure-equalizing device may be configured such that the pressure-equalizing device is impermeable to the cooling liquid flowing from the circuit in a direction of the surroundings.

### Summary

The battery drying device according to the embodiments can be used for drying a battery, for example a vehicle battery in vehicles. The vehicle battery is used for general power supply in the vehicle and/or for driving an electric motor used to drive the vehicle.

The battery drying device can be used to efficiently remove moisture before it enters the interior of a battery or from the interior of the battery. For this purpose, the battery drying device has a drying housing in which a moisture adsorbing agent or drying agent is accommodated. An inlet opening is provided in the drying housing, which is covered by a membrane that keeps out liquid, in particular water, but could be permeable to water in the gaseous state. The membrane in the inlet opening enables pressure compensation in the interior of a battery housing of a battery, for example, in case of pressure differences due to a temperature change of the air in the battery housing. At the same time, the membrane prevents water entry from the outside into the battery drying device and into the battery.

A connection opening is also provided in the drying housing, the connection opening enabling a flow connection to the battery housing of the battery. A moisture adsorber means is arranged in the flow path between the inlet opening and the connecting opening, the moisture adsorber means dividing the interior of the drying housing in to separate chambers. An adjustable connection valve is inserted into the connection opening, which can be adjusted between a closed position and an open position.

The inlet opening and the connection opening are located in the drying housing in such a way that the moisture adsorbent is arranged in the flow path between these openings. This ensures that both the air from the outside flowing in via the inlet opening and the air from the battery housing flowing out via the connection opening are adsorbed in the moisture adsorber means.

A heating device is integrated into the battery drying device, by means of which the moisture adsorber means can be heated in order to remove the adsorbed moisture from the moisture adsorber means and thereby regenerate the moisture adsorber means. In particular, the heating means is designed to be electrically operable. During regular operation, the heating means is not active so that moisture can be adsorbed in the moisture adsorber means. This state corresponds to the operating mode in which the connecting valve is in an open position.

A further opening is integrated in the drying housing, which has the function of a regeneration opening and which is not connected to the battery housing. In particular, a flow connection with the environment can be established via the regeneration opening. An adjustable regeneration valve is inserted into the regeneration opening, which can be adjusted between a closed position and an open position. In the operating mode, the regeneration valve is closed.

To regenerate the moisture adsorber means, a regeneration mode is activated in which the connection valve located in the connection opening to the battery housing is set to a closed position, and at the same time the regeneration valve in the regeneration opening is set to the open position. The heating device is actuated in the regeneration mode. Due to the closed connection valve, it is ensured that the air in the drying housing loaded with moisture from the moisture adsorber means does not enter the battery housing, but is rather discharged to the environment via the open regeneration valve and the regeneration opening. As soon as the regeneration mode is finished, the heating device is switched off, the regeneration valve is closed and the connecting valve is opened again, whereupon the battery drying device is in the operating mode again.

In an advantageous embodiment, the regeneration opening and the inlet opening covered by the membrane are located on the same side of the moisture adsorber means. However, a configuration in which the inlet opening and the regeneration opening are located on opposite sides of the moisture adsorber means is also possible. The heating device, which serves to heat the moisture adsorber means in the regeneration mode, is designed, for example, as an electric heating rod.

The battery drying device includes an electrically operated pump which serves to generate an air flow in the regeneration mode. The air flow can be directed through the moisture adsorber means, thereby significantly increasing the efficiency of drying the moisture adsorber means in the regeneration mode. The air flow is directed through the moisture adsorber means and can be discharged into the environment via the open regeneration opening.

Advantageously, the electrically driven pump is integrated into the drying housing. This has the advantage that the pump is protected from environmental influences and no additional space is required for the pump.

According to a further advantageous embodiment, the drying housing has a ventilation opening with an adjustable ventilation valve arranged therein, the ventilation opening and the regeneration opening being located on opposite sides of the moisture adsorber means. In the operating mode, the ventilation opening is closed, and in the regeneration mode, the ventilation opening is open so that a flow of air from the environment can be directed through the moisture adsorber means via the regeneration opening and discharged back into the environment via the ventilation opening. This design with ventilation opening and regeneration opening on opposite sides of the moisture adsorber means is combined in particular with the electrically operated pump, which is located for example on the same side as the moisture adsorber means as well as the regeneration opening. When the pump is actuated, air is drawn in from the environment and passed through the moisture adsorber means, whereupon the moisture-laden air is returned to the environment via the regeneration opening. In operating mode, both the ventilation opening and the regeneration opening are closed.

A control unit and a power supply unit may be associated with the battery drying device, wherein individual controllable units of the battery drying device are controlled via the control unit, in particular the valves and the heating device. The electrical power required for the control and the change of state of the individual controllable units is provided via the power supply unit.

Another aspect of the embodiments relates to a battery, in particular a vehicle battery having a battery drying device as described above. The battery drying device is located outside the battery housing, the drying housing and the battery housing advantageously being adjacent to each other. The flow connection is made via the connection opening, which is provided in the drying housing. The battery housing may also have a corresponding connection opening.

The embodiments further relate to a vehicle having a predescribed battery with which a predescribed battery drying device is associated.

Finally, the embodiments relate to a method of operating a pre-described battery drying device. In the method, the moisture adsorber means is dried in a regeneration mode by moving the connection valve to the closed position and the regeneration valve to the open position, whereupon the heating means is actuated. Conversely, the battery drying device may be operated in an operating mode without regenerating the moisture adsorbent means and without actuating the heating means as long as the connecting valve is in the open position and the regeneration valve is in the closed position.

### Brief Description of Drawings

A description will now be given as a non-limiting example of a form of several embodiments of a battery drying device. Reference will be made to the attached drawings, in which:
Figure 1 is a schematic representation of a battery drying device next to a battery housing;
Figure 2 is a battery drying device in another embodiment; and
Figure 3 a battery drying device in yet another embodiment

In the figures, same components are provided with the same reference numerals.

### Detailed Description

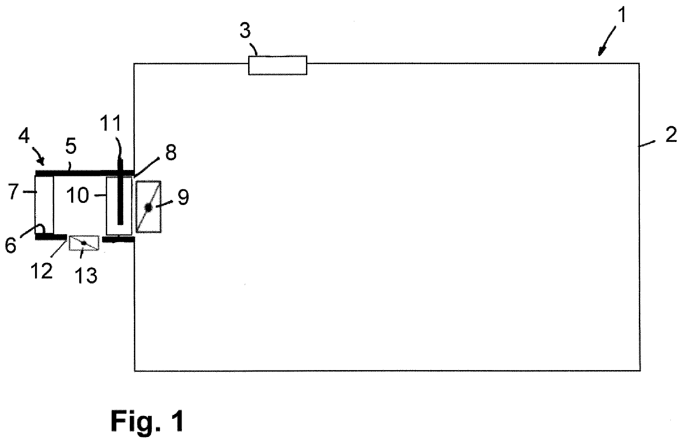

Figure 1 schematically depicts a battery 1, for example a vehicle battery for an electric drive motor in a vehicle. The battery 1 includes a battery housing 2 in which battery cells are accommodated. A pressure relief valve 3 is integrated into the battery housing 2, which serves as an emergency degassing unit for reducing an increased internal pressure in the battery housing 2.

A battery drying device 4 is associated with the battery 1 for adsorbing moisture in the air passing through the battery drying device 4. In a drying housing 5 of the battery drying device 4, an inlet opening 6 with a membrane 7 is arranged, through which ambient air flows into the battery drying device 4 and further into the interior of the battery housing 2. The membrane 7 prevents water in liquid form from passing, but it is possible for water in gaseous form to pass through the membrane 7. The water in gaseous form is at least partially removed from the air flow through the battery drying device 4.

In the drying housing 5 of the battery drying device 4, there is also provided a connection opening 8 which is opposite the inlet opening 6 and which is aligned with a corresponding opening in the battery housing 2. An adjustable connection valve 9 is inserted in the connection opening 8, which can be adjusted between an open position and a closed position.

Inside the drying housing 5 a moisture adsorber means 10 is arranged in the flow path of the air passing through the drying housing 5 which adsorbs the moisture in the air flow. A heating device 11 is integrated into the moisture adsorber means 10, for example a heating rod.

A regeneration opening 12 is provided in the drying housing 5, in which an adjustable regeneration valve 13 is integrated. The regeneration opening 12 and the inlet opening 6 in are located on the same side of the moisture adsorber means 10, with respect to the air flow passed through it, and is thus located on the side facing away from the connection opening 8.

The battery drying device 4 can be operated in a regular operation mode and in a regeneration mode. In the regular operation mode, the connection valve 9 is open and the regeneration valve 13 is closed, so that ambient air can pass through the inlet opening 6 with the membrane 7. The moisture adsorber means 10 adsorbs the moisture in the air, and subsequently the air cleaned of the moisture enters the interior of the battery housing 2.

In the regeneration mode, the connecting valve 9 is closed and the regeneration valve 13 is open. At the same time, the heating device 11 is actuated so that the moisture adsorber means 10 is heated and moisture is released from the moisture adsorber means 10 into the air in the drying housing 5, which can be released into the environment through the opened regeneration opening 12. After completion of the regeneration process, which is carried out for example at regular time intervals, the regeneration valve 13 is closed again and the connecting valve 9 is opened and the heating device 11 is switched off. The battery drying device 4 is in the now again in the operating mode.

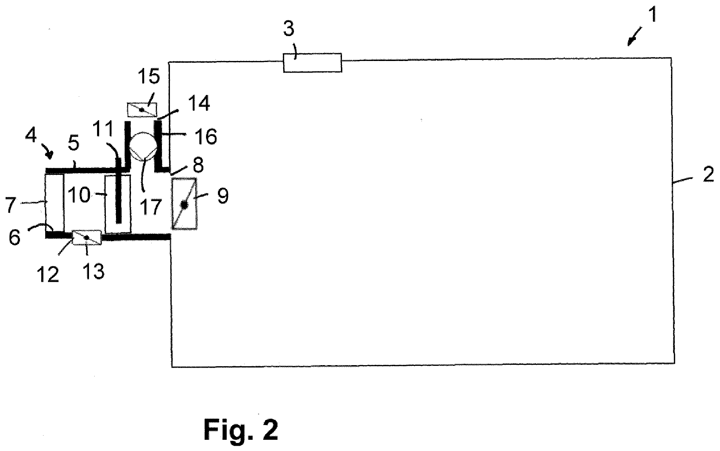

Fig. 2 shows another embodiment of a battery drying device 4 which, as in the first embodiment, is located on the side of a battery housing 2 of a battery 1. The battery drying device 4 has an inlet opening 6 with a membrane 7 in a drying housing 5. At the distal end, battery housing 2 has a connection opening 8 with a connection valve 9. A moisture adsorber means 10 with an integrated heating device 11 is located between the inlet opening 6 and the connection opening 8. A regeneration opening 12 with a regeneration valve 13 is located adjacent to the inlet opening 6. In this respect, the design corresponds to that of the first embodiment.

Furthermore, the battery drying device 4 has a ventilation opening 14 with an integrated, adjustable ventilation valve 15, the ventilation opening 14 being located at the end of a housing socket 16 which is formed integrally with the drying housing 5 and branches between the moisture adsorber means 10 and the connection opening 8. An electric pump 17 is integrated in the housing socket 16. When activating pump 17, an air flow is generated from the environment through the housing socket 16 to the interior of the battery drying device 4.

In the regular operation mode, the regeneration valve 13 and the ventilation valve 15 are closed and the connection valve 9 is open. Both the heating device 11 and the electric pump 17 are switched off. Air can flow into the battery drying device 4 from the environment via the inlet opening 6 and the membrane 7.

In the regeneration mode, the connection valve 9 is closed, and at the same time the regeneration valve 13 and the ventilation valve 15 are opened. In addition, the heating device 11 is switched on and the electric pump 17 is actuated so that an air flow is drawn from the environment into the housing socket 16. This air flow passes through the moisture adsorber means 10, thereby ensuring effective drying of the moisture adsorber means 10.

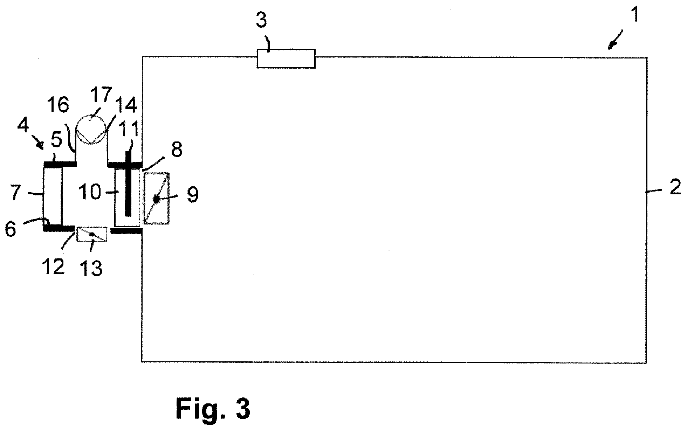

In the embodiment example according to Fig. 3, an electric pump 17 is also provided, which is located in a housing socket 16 with a ventilation opening 14 at its end. In this embodiment example, the housing socket 16 branches upstream of the moisture adsorber means 10. The housing socket 16 with the ventilation opening 14 is located opposite the regeneration opening 12 and is located on the same side of the moisture adsorber means 10 as the regeneration opening 12 as well as the inlet opening 6.

### Reference Numbers

1 battery
2 battery housing
3 pressure relief valve
4 battery drying device
5 drying housing
6 inlet opening
7 membrane
8 connection opening
9 connection valve
10 moisture adsorber means
11 heating device
12 regeneration opening
13 regeneration valve
14 ventilation opening
15 ventilation valve
16 housing socket
17 pump

## Claims

1. A battery drying device (4) comprising:
a membrane (7) disposed external to a battery housing (2) of a battery (1), and configured to prevent liquid water from passing through the membrane (7) and to allow gaseous water to pass through the membrane (7);
a moisture adsorber means (10) disposed external to the battery housing (2) and downstream from the membrane (7), and configured to adsorb moisture in the gaseous water;
an adjustable connection valve (9) disposed adjacent to the battery housing (2) and downstream from the moisture adsorber means (10), and configured to:
in a regular operation mode, be open and allow air from which the moisture is adsorbed by the moisture adsorber means (10) into the battery housing (2); and
in a regeneration mode, be closed;
an adjustable regeneration valve (13) interposed between the membrane (7) and the moisture adsorber means (10) and configured to:
in the regeneration mode, be open and allow air between the membrane (7) and the moisture adsorber means (10) to be released into an environment external to the battery housing (2); and
in the regular operation mode, be closed position; and
an electrically operated pump (17) interposed between the moisture adsorber means (10) and the adjustable connection valve (9), and configured to:
in the regeneration mode, generate a drying air flow for the moisture adsorber means (10); and
in the regular operation mode, be switched off.

2. The battery drying device (4) according to claim 1, further comprising a heating device (11) integrated into the moisture adsorber means (10), and configured to:
in the regeneration mode, heat the moisture adsorber means (10) so that the moisture is released from the moisture adsorber means (10) into the air between the membrane (7) and the moisture adsorber means (10); and
in the regular operation mode, be switched off.

3. The battery drying device (4) according to claim 1 or 2, further comprising a drying housing (5) disposed external to the battery housing (2), and comprising:
an inlet opening (6) at which the membrane (7) is disposed;
a connection opening (8) at which the moisture adsorber means (10) is disposed; and
a regeneration opening (12) interposed between the inlet opening (6) and the connection opening (8) and at which the adjustable regeneration valve (13) is disposed

4. The battery drying device (4) according to claim 3, wherein the drying housing (5) further comprises a ventilation opening (14), the ventilation opening (14) and the regeneration opening (12) respectively being arranged on opposite sides of the moisture adsorber means (10),
the battery drying device further comprises an adjustable ventilation valve (15) disposed adjacent to the ventilation opening (14), and configured to:
in the regeneration mode, be open and allow air from the environment into the ventilation opening (14); and
in the regular operation mode, be closed, and
the electrically operated pump (17) is disposed downstream from the ventilation opening (14), and is further configured to draw the air allowed into the ventilation opening (14).

5. A battery (1) with the battery drying device (4) according to any of claims 1 to 4.

6. A vehicle comprising the battery (1) according to claim 5.

7. A method of operating the battery drying device (4) according to claim 2, the method comprising drying the moisture adsorber means (10) by:
closing the adjustable connection valve (9);
opening the adjustable regeneration valve (13); and
switching on the heating device (11).

## Patentansprüche

1. Batterietrocknungsvorrichtung (4), umfassend:
eine Membran (7), die außerhalb eines Batteriegehäuses (2) einer Batterie (1) angeordnet und so konfiguriert ist, dass sie flüssiges Wasser daran hindert, durch die Membran (7) hindurchzuströmen, und gasförmiges Wasser durch die Membran (7) hindurchströmen lässt;
eine Feuchtigkeitsadsorptionsvorrichtung (10), die außerhalb des Batteriegehäuses (2) und stromabwärts der Membran (7) angeordnet und so konfiguriert ist, dass sie Feuchtigkeit im gasförmigen Wasser adsorbiert;
ein einstellbares Verbindungsventil (9), das benachbart zum Batteriegehäuse (2) und stromabwärts der Feuchtigkeitsadsorptionsvorrichtung (10) angeordnet und so konfiguriert ist, dass es:
in einem regulären Betriebsmodus geöffnet ist und Luft, aus der die Feuchtigkeit durch die Feuchtigkeitsadsorptionsvorrichtung (10) adsorbiert ist, in das Batteriegehäuse (2) strömen lässt; und
in einem Regenerationsmodus geschlossen ist;
ein einstellbares Regenerationsventil (13), das zwischen der Membran (7) und der Feuchtigkeitsadsorptionsvorrichtung (10) angeordnet und so konfiguriert ist, dass es:
im Regenerationsmodus offen ist und Luft zwischen der Membran (7) und der Feuchtigkeitsadsorptionsvorrichtung (10) in eine Umgebung außerhalb des Batteriegehäuses (2) entweichen lässt; und
im regulären Betriebsmodus geschlossen ist; und
eine elektrisch betriebene Pumpe (17), die zwischen der Feuchtigkeitsadsorptionsvorrichtung (10) und dem einstellbaren Verbindungsventil (9) angeordnet und so konfiguriert ist, dass sie:
im Regenerationsmodus einen Trockenluftstrom für die Feuchtigkeitsadsorptionsvorrichtung (10) erzeugt; und
im Normalbetriebsmodus ausgeschaltet ist.

2. Batterietrocknungsvorrichtung (4) nach Anspruch 1, die ferner eine in die Feuchtigkeitsadsorptionsvorrichtung (10) integrierte Heizvorrichtung (11) umfasst, die so konfiguriert ist, dass sie:
im Regenerationsmodus die Feuchtigkeitsadsorptionsvorrichtung (10) erwärmt, so dass die Feuchtigkeit aus der Feuchtigkeitsadsorptionsvorrichtung (10) in die Luft zwischen der Membran (7) und der Feuchtigkeitsadsorptionsvorrichtung (10) abgegeben wird; und
im regulären Betriebsmodus abgeschaltet wird.

3. Batterietrocknungsvorrichtung (4) nach Anspruch 1 oder 2, die ferner ein außerhalb des Batteriegehäuses (2) angeordnetes Trocknungsgehäuse (5) umfasst, und umfassend:
eine Einlassöffnung (6), an der die Membran (7) angeordnet ist;
eine Anschlussöffnung (8), an der die Feuchtigkeitsadsorptionsvorrichtung (10) angeordnet ist; und
eine Regenerationsöffnung (12), die zwischen der Einlassöffnung (6) und der Anschlussöffnung (8) angeordnet ist und an der das einstellbare Regenerationsventil (13) angeordnet ist.

4. Batterietrocknungsvorrichtung (4) nach Anspruch 3, wobei das Trocknungsgehäuse (5) ferner eine Belüftungsöffnung (14) umfasst, wobei die Belüftungsöffnung (14) und die Regenerationsöffnung (12) jeweils auf gegenüberliegenden Seiten der Feuchtigkeitsadsorptionsvorrichtung (10) angeordnet sind,
die Batterietrocknungsvorrichtung umfasst ferner ein einstellbares Belüftungsventil (15), das benachbart zur Belüftungsöffnung (14) angeordnet und so konfiguriert ist, dass es:
im Regenerationsmodus geöffnet ist und Luft aus der Umgebung in die Belüftungsöffnung (14) strömen lässt; und
im Normalbetriebsmodus geschlossen ist, und
die elektrisch betriebene Pumpe (17) stromabwärts der Belüftungsöffnung (14) angeordnet ist und ferner so konfiguriert ist, dass sie die in die Belüftungsöffnung (14) eingelassene Luft ansaugt.

5. Batterie (1) mit der Batterietrocknungsvorrichtung (4) nach einem der Ansprüche 1 bis 4.

6. Fahrzeug mit der Batterie (1) nach Anspruch 5.

7. Verfahren zum Betreiben der Batterietrocknungsvorrichtung (4) nach Anspruch 2, wobei das Verfahren das Trocknen der Feuchtigkeitsadsorptionsvorrichtung (10) umfasst durch:
Schließen des einstellbaren Verbindungsventils (9);
Öffnen des einstellbaren Regenerationsventils (13); und
Einschalten der Heizvorrichtung (11).

## Revendications

1. Dispositif de séchage de batterie (4) comprenant:
une membrane (7) disposée à l'extérieur d'un boîtier de batterie (2) d'une batterie (1) et configurée pour empêcher l'eau liquide de passer à travers la membrane (7) et pour permettre à l'eau gazeuse de passer à travers la membrane (7);
un moyen d'adsorption d'humidité (10) disposé à l'extérieur du boîtier de batterie (2) et en aval de la membrane (7), et configuré pour adsorber l'humidité dans l'eau gazeuse;
une soupape de raccordement réglable (9) disposée à proximité du boîtier de batterie (2) et en aval du moyen d'adsorption d'humidité (10), et configurée pour:
en mode de fonctionnement normal, être ouverte et permettre à l'air dont l'humidité est adsorbée par le moyen d'adsorption d'humidité (10) de pénétrer dans le boîtier de batterie (2); et
en mode régénération, être fermée;
une soupape de régénération réglable (13) interposée entre la membrane (7) et le moyen d'adsorption d'humidité (10) et configurée pour:
en mode régénération, être ouverte et permettre à l'air entre la membrane (7) et le moyen d'adsorption d'humidité (10) d'être libéré dans un environnement extérieur au boîtier de batterie (2); et
en mode de fonctionnement normal, être en position fermée; et
une pompe actionnée à l'électricité (17) interposée entre le moyen d'adsorption d'humidité (10) et la soupape de raccordement réglable (9), et configurée pour:
en mode régénération, générer un écoulement d'air de séchage pour le moyen d'adsorption d'humidité (10); et
en mode de fonctionnement normal, être désactivée.

2. Dispositif de séchage de batterie (4) selon la revendication 1, comprenant en outre un dispositif de chauffage (11) intégré dans le moyen d'adsorption d'humidité (10) et configuré pour:
en mode régénération, chauffer le moyen d'adsorption d'humidité (10) de sorte que l'humidité soit libérée du moyen d'adsorption d'humidité (10) dans l'air entre la membrane (7) et le moyen d'adsorption d'humidité (10); et
en mode de fonctionnement normal, être désactivé.

3. Dispositif de séchage de batterie (4) selon la revendication 1 ou 2, comprenant en outre un boîtier de séchage (5) disposé à l'extérieur du boîtier de batterie (2) et comprenant:
une ouverture d'admission (6) au niveau de laquelle la membrane (7) est disposée;
une ouverture de raccordement (8) au niveau de laquelle le moyen d'adsorption d'humidité (10) est disposé; et
une ouverture de régénération (12) interposée entre l'ouverture d'admission (6) et l'ouverture de raccordement (8) et au niveau de laquelle est disposée la soupape de régénération réglable (13).

4. Dispositif de séchage de batterie (4) selon la revendication 3, dans lequel le boîtier de séchage (5) comprend en outre une ouverture de ventilation (14), l'ouverture de ventilation (14) et l'ouverture de régénération (12) étant respectivement disposées sur des côtés opposés du moyen d'adsorption d'humidité (10),
le dispositif de séchage de batterie comprenant en outre une soupape de ventilation réglable (15) disposée à proximité de l'ouverture de ventilation (14) et configurée pour:
en mode régénération, être ouverte et permettre à l'air ambiant de pénétrer dans l'ouverture de ventilation (14); et
en mode de fonctionnement normal, être fermée, et
la pompe actionnée à l'électricité (17) est disposée en aval de l'ouverture de ventilation (14) et est en outre configurée pour aspirer l'air admis dans l'ouverture de ventilation (14).

5. Batterie (1) avec le dispositif de séchage de batterie (4) selon l'une quelconque des revendications 1 à 4.

6. Véhicule comprenant la batterie (1) selon la revendication 5.

7. Procédé de fonctionnement du dispositif de séchage de batterie (4) selon la revendication 2, le procédé comprenant le séchage du moyen d'adsorption d'humidité (10) en:
fermant la soupape de raccordement réglable (9);
ouvrant la soupape de régénération réglable (13); et
mettant en marche le dispositif de chauffage (11).
